# EUROPEAN PATENT SPECIFICATION

(11) **EP 3 853 836 B1**
(45) Date of publication and mention of the grant of the patent: **08.11.2023**
(21) Application number: 19783436.9
(22) Date of filing: 18.09.2019
(51) Int. Cl.: G09B 23/28

(54) **A TRAINING DEVICE**
TRAININGSVORRICHTUNG
DISPOSITIF D'ENTRAÎNEMENT

(30) Priority: 19.09.2018 IE S20180316
(43) Date of publication of application: 28.07.2021
(73) Proprietor: Respiro Research and Development Limited, Cork, T12 EW66 (IE)
(72) Inventor: SMITH, Simon, Cork (IE); HENN, Patrick, Cork (IE); GAFFNEY, Robert, Mallow, Co. Cork (IE); PATEL, Ruth, Kinsale, Co. Cork (IE); PATEL, Vijay, Kinsale, Co. Cork (IE)
(74) Representative: Purdylucey Intellectual Property
(86) International application number: PCT/EP2019/075077
(87) International publication number: WO 2020/058369

(56) References cited:
- WO-A1-2016/102571
- JP-A- 2014 002 185
- US-A1- 2018 158 373

## Description

### Introduction

This invention relates to a training device and more particularly to a wearable venipuncture training device.

### Background of the Invention

Recent guidelines introduced by the General Medical Council (UK) (which came into effect in January 2016) require that clinical skills, such as taking blood, be taught using simulation before allowing trainee doctors to take blood from a real patient. Trainee doctors commonly practise clinical skills, such as venipuncture, via simulation in two ways: firstly, using a non-wearable simulation device where the student practices the skill on a device without any human interaction (such as the bench-top manikin arm for venipuncture training), and secondly, via patient simulation training sessions, set in a simulated emergency/hospital/doctor's office where a role-playing patient is assessed and treated by the student using wearable simulation devices. The idea of patient simulation training is for students to feel like they are performing the clinical procedure on a real person thus leaving a much smaller skills gap to be bridged by the student when they come in contact with real patients. However, the problem now currently faced by medical schools is that they lack sufficiently realistic simulation devices to create these high fidelity training scenarios.

The venipuncture training device most commonly used by medical schools worldwide is the bench-top manikin arm which was first introduced in the 1950s. In general, bench-top manikin arms have a skin-like surface concealing integrated vasculature from which simulated blood is drawn by a trainee. However, benchtop manikin arms are poor imitations of real patients as they are generally cumbersome, heavy and difficult to manipulate and fail to replicate real life patient interactions for trainee doctors, nurses and the like. Due to their cumbersome nature, the manikin arms cannot be adapted for use in high fidelity patient simulation scenarios. In addition, benchtop manikin arms require frequent maintenance such as re-skinning and vasculature replacement which requires removal of the manikin arm to a service centre so that the manikin arm is not available for use for extended periods. The re-skinning and vasculature replacement operations are generally performed by skilled technicians and are costly. Moreover, the skin employed on manikins is typically natural rubber which retains puncture marks each time venipuncture is performed rendering the appearance of the skin less real and prompting the trainee where to take blood. The natural rubber material is also artificially cold to the touch.

In short, manikin arms are useful for the development of psychomotor skills during initial training attempts but lack realism as students cannot practise venipuncture processes from start to finish as they would with real patients. The manikin arms are also bulky, heavy to carry and manoeuvre, difficult to service and repair and require large storage spaces in schools.

Many current training pathways also see students immediately progress from taking blood from a manikin arm to taking blood from a real patient leaving a skills deficit that must be filled on the job, sometimes to the detriment of patients.

Various wearable venipuncture simulation devices have been devised to improve on the manikin arm and better simulate patient scenarios. For example, Japanese Patent Specification Nos. 5520263, 5992217 and 6039929 all describe similar wearable venipuncture training devices that are strapped to a volunteer's arm. However, the training devices are all substantially rigid and fail to allow bending of the elbow joint when placed over the antecubital fossa, thus making them unsuitable for high fidelity simulation. The devices fail to simulate a real patient arm in practice as they do not conform to the natural movement of the limb, instead they sit atop of it. Students are aware of the obvious nature of the devices as the components are not concealed: the tubing is visible running in and out of the device connecting to an external reservoir of imitation blood placed on a table. These devices also cannot be worn under clothes due to their external components, again detracting from the realism of the training scenario. These devices cannot be used in on-the-field mobile training, as support for the external reservoir is required. In summary, whilst patient and student can interact, the devices are too obvious and unrealistic to replicate the venipuncture procedure in a variety of scenarios accurately.

US Patent Specification No. 5,839,904 also describes a wearable device while PCT Patent Specification No. WO 2016/102571 describes a wearable sleeve-like device that still fails to accurately replicate the natural shape and physiological movement of a patient's arm and associated vasculature whilst preventing injury to a wearer in use.

An object of the invention is to overcome at least some of the problems of the prior art.

### Summary of the Invention

According to the invention there is provided a wearable venipuncture training device for attachment to a limb comprising:
an anatomical model attachable to the limb;
artificial vasculature associated with the anatomical model;
a needle resistant layer for preventing a needle from puncturing the limb, , and
an outer needle permeable sleeve shaped to hold the anatomical model and vasculature on the limb characterised in that the needle resistant layer is a flexible needle resistant layer comprising a flexible layer of material and is housed in a compartment, closed by a compartment cover, defined in the anatomical model.

Preferably, the outer needle permeable sleeve is also shaped to conceal the anatomical model and vasculature on the limb.

Preferably, the flexible needle resistant layer is flexible in both a transverse and a longitudinal plane. More preferably, the flexible needle resistant layer is flexible in all planes.

Preferably, the flexible needle resistant layer is selected from the group consisting of a metal, a polymer, a super dense fabric, a super dense strong fabric with a ceramic coating, ceramic tiles, steel mesh and Kevlar. More preferably, the flexible needle resistant layer comprises a woven metal or polymer such as an aramid or a para-aramid material. Most preferably, the aramid or a para-aramid material further comprises a ceramic layer or coating such as a ceramic composite coating.

In a preferred embodiment, the aramid or para-aramid material comprises a (Eureka) SupraBlock Stop (Trade Mark) material.

Suitably, the anatomical model comprises an artificial subcutaneous layer.

Preferably, the artificial subcutaneous layer comprises an artificial vasculature retaining mechanism. More preferably, the artificial vasculature retaining mechanism comprises a groove defined in the subcutaneous layer. Most preferably, the groove comprises grips for gripping and holding the artificial vasculature.

In a preferred embodiment of the invention, the artificial vasculature is partially unsupported to allow movement of the artificial vasculature. Preferably, the artificial vasculature is partially unsupported to allow lateral movement of the artificial vasculature thus mimicking movement of a real vein. More preferably, the groove comprises a groove wider portion defining a wriggle space in which the artificial vasculature is unsupported.

Suitably, the artificial vasculature comprises an artificial blood vessel.

Preferably, the artificial subcutaneous layer comprises a joint to facilitate articulation of the subcutaneous layer with the limb. More preferably, the joint is defined by ribs in the subcutaneous layer.

Advantageously, the subcutaneous layer further comprises a seat for receiving the reservoir at a proximal end thereof.

Suitably, the subcutaneous layer comprises a hollow for receiving an end cap of an artificial blood vessel at a distal end thereof.

In a preferred embodiment of the invention, the anatomical model is formed from a resiliently deformable material. Preferably, the resiliently deformable material comprises a silicone material. Alternatively, the resiliently deformable material comprises a synthetic or natural rubber material or a flexible polymer. Optionally, the synthetic or natural rubber material or flexible polymer is selected from the group consisting of polyurethanes, open cell foams, ethylene propylene diene monomer rubber (EPDM), butyl rubber, closed cell foams (such as ethyl vinyl acetate (EVA), natural rubber, nitrile rubber (NBR), styrene-butadiene rubber (SBR) and open or closed cell neoprene.

Preferably, the outer needle permeable sleeve is coloured to resemble skin. More preferably, the sleeve comprises a pocket for the anatomical model and the artificial vasculature. Most preferably, the pocket comprises an internal pocket.

Suitably, the outer sleeve is formed from neoprene material. Preferably, the outer sleeve further comprises spandex. More preferably, the outer sleeve comprises a combination of neoprene and spandex. Most preferably, the outer sleeve comprises neoprene for about 2/3 of its circumference and spandex for about 1/3 of its circumference.

By allowing a trainee to perceive that he/she is taking blood from a patient's arm, rather than from a device attached to an arm, the training device of the invention ensures that trainee's experience of taking blood in a simulated clinical scenario situation is as realistic as possible. Accordingly, by providing a more realistic context, the training device of the invention enables health-care educators to improve the delivery of competence-based learning. The wearable training device is unobtrusive, virtually indistinguishable from a wearer's arm and allows free movement of all parts of the arm whilst being resistant to perforation by needles. By locating the needle resistant layer adjacent the artificial vasculature at the antecubital fossa, redundant needle resistant material that would otherwise cause unnecessary bulking of the training device is eliminated. The needle resistant material of the needle resistant layer provides a high degree of needle resistance whilst optimising flexibility of the device. Moreover, the wriggle space provided in the training device accurately simulates real life palpation scenarios.

As the training device is made of completely flexible materials i.e. a silicone or other flexible base layer into which a flexible needle resistant layer has been incorporated, the device conforms with the shape of the wearer's arm throughout its length whilst still allowing the elbow joint to articulate at the antecubital fossa. In addition, the outer needle permeable sleeve covers the length of the arm and can be coloured as required to blend with the wearer's natural skin tone.

The artificial blood reservoir of the training device is also slim, relatively small and accommodated within the device to be easily concealed as required beneath sleeves, gowns, clothing etc.

The training device can therefore be incorporated into high fidelity clinical training scenarios and can even be worn concealed beneath clothing at the beginning of a scenario. As a result, the training device finds particular utility in ambulatory patient scenarios e.g. GP training practice or emergency training scenarios.

In addition to the taking of blood samples, the training device can be employed for cannulae insertion, injections and the like.

In short, the modular training device of the invention allows trainees to practise each step of a successful venipuncture procedure, beginning with patient identification, obtaining consent, labelling blood sample bottles through to successfully obtaining a sample of blood while the training device can be maintained with ease with individual modular components being easily replaceable without requiring significant downtime or skilled technicians. The modular training device, being compact and light, can also be easily stored and transported as required.

The training device can be used for both medical and veterinary training as desired.

### Brief Description of the Drawings

The invention will now be described, by way of example only, with reference to the accompanying drawings in which:
Figure 1 is a perspective view from above and one side of a wearable venipuncture training device of the invention made up of an outer sleeve, a subcutaneous polymer layer shaped to replicate the anatomy of an arm, artificial vasculature supported in the subcutaneous layer, a needle resistant layer beneath the artificial vasculature and an artificial blood reservoir being worn by a volunteer wearer on the wearer's arm;
Figure 2 is a perspective view from above and one side of the wearable venipuncture device of Figure 1 with the outer sleeve removed to show the subcutaneous polymer layer and the vasculature in the subcutaneous layer;
Figure 3 is a side elevation in partial cross-section of the venipuncture training device of Figure 1 removed from the volunteer with the subcutaneous polymer layer and associated vasculature visible and the artificial blood reservoir inserted in the internal pocket defined in the sleeve;
Figure 4 is a side elevation of the venipuncture training device of Figure 3 with the subcutaneous polymer layer and associated vasculature and artificial blood reservoir removed from the pocket with the direction of insertion of the subcutaneous polymer layer and associated vasculature into the pocket indicated by the arrow;
Figure 5 is a perspective view from above and one side of the removed subcutaneous polymer layer and associated vasculature and artificial blood reservoir of Figure 4;
Figure 6 is a top plan view of the subcutaneous polymer layer and associated vasculature and artificial blood reservoir of Figure 5;
Figure 7 is an enlarged top plan view of the joint of the subcutaneous polymer layer showing the wriggle space defined in the subcutaneous polymer layer to allow movement of the artificial vasculature in the subcutaneous polymer layer;
Figure 8 is a cross-sectional view through the subcutaneous polymer layer with the flexible needle resistant material layer visible beneath the artificial vasculature and the direction of wriggle movement of the artificial blood vessel upon palpation indicated by the arrows;
Figure 9 is an exploded cross-sectional view through the subcutaneous polymer layer showing the compartment defined in the subcutaneous polymer layer for the flexible needle resistant material and the flexible need resistant material cover;
Figure 10 is an enlarged side elevation of the flexing ribs of the joint in a non-articulated position;
Figure 11 is an enlarged side elevation of the flexing ribs of the joint in an articulated position;
Figure 12 is an exploded perspective view from above and one side of the wearable venipuncture training device with the outer sleeve omitted;
Figure 13 is a side elevation of the wearable venipuncture training device with a needle inserted in the artificial vasculature and the outer sleeve omitted, and
Figure 14 is an enlarged side elevation of the needle inserted in the artificial vasculature of Figure 13.

### Detailed Description of the Invention

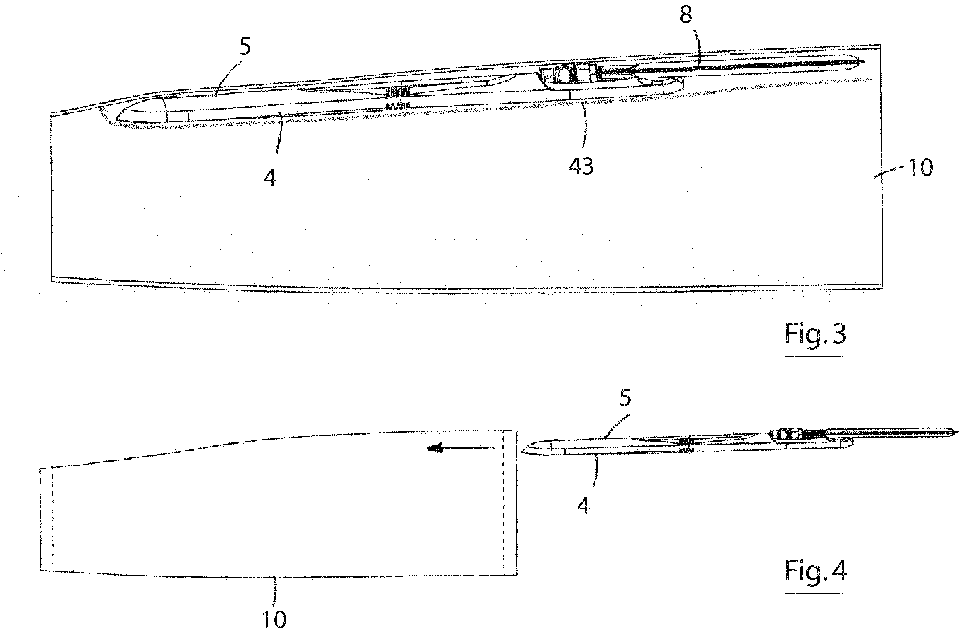

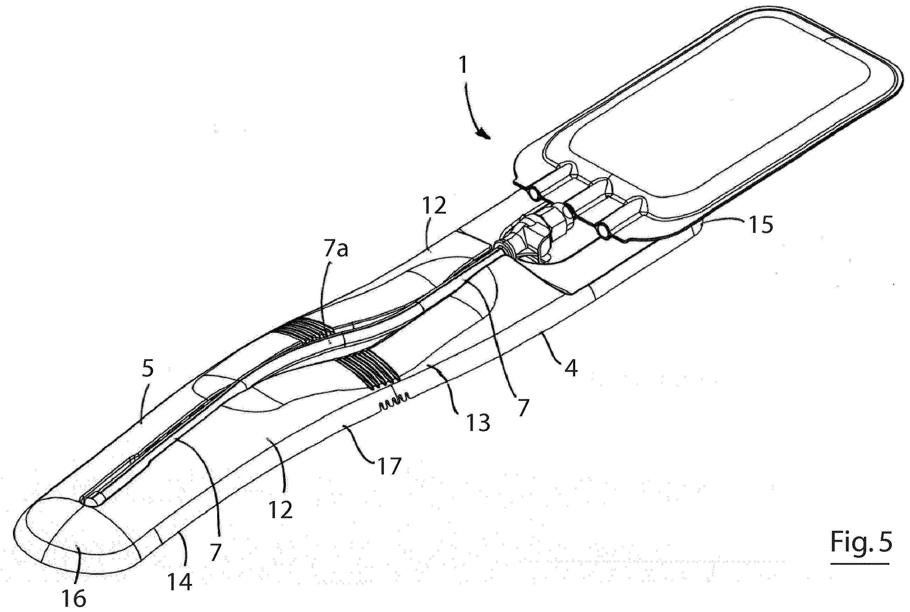

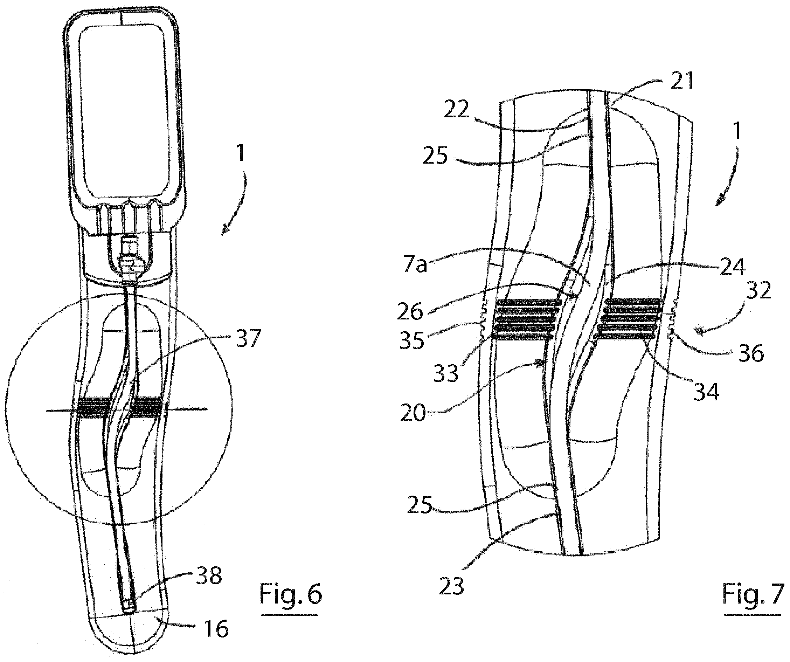

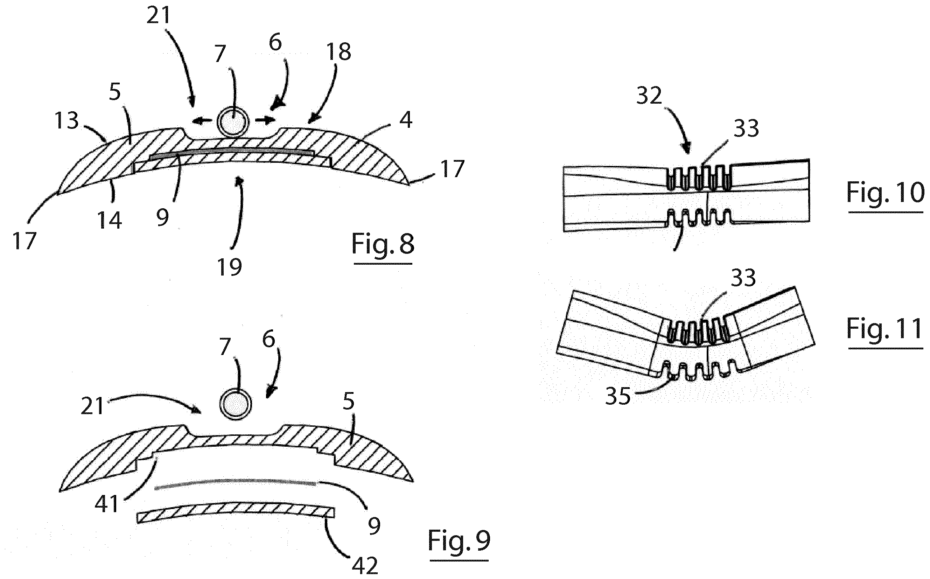

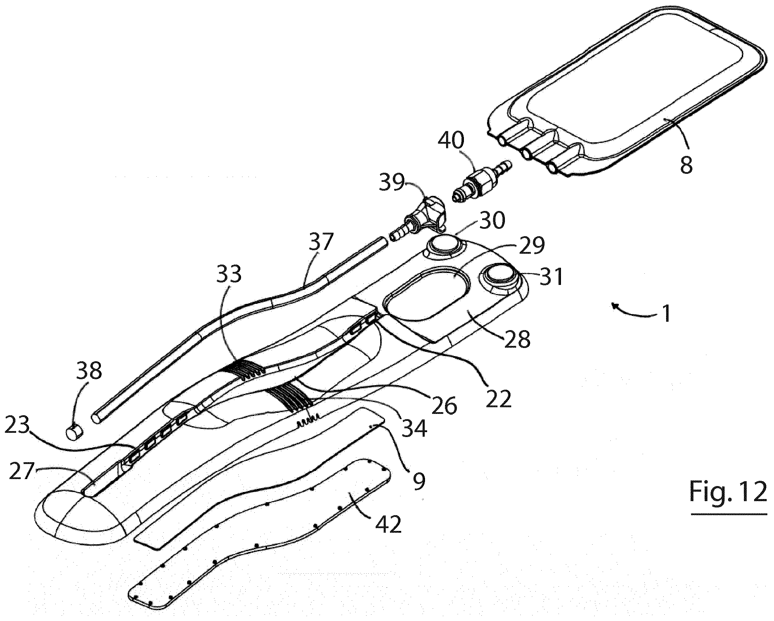

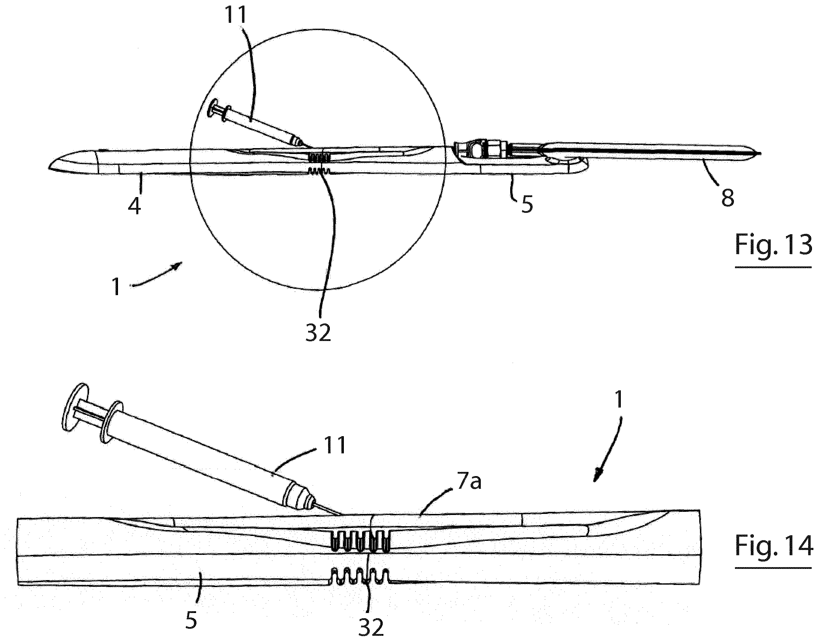

Figures 1 to 13 show a modular wearable venipuncture training device of the invention generally indicated by the reference numeral 1 for use on the limb/arm 2 of a volunteer wearer 3 which is generally made up of an anatomical model 4 in the form of an arcuate subcutaneous layer 5 housing artificial vasculature 6 such as an artificial blood vessel 7 in fluid communication with an artificial blood reservoir 8. A flexible needle resistant layer 9 is provided below the subcutaneous layer 5 to protect the volunteer 3 from accidental needle punctures whilst still allowing articulation of the training device 1 while the training device 1 is encased in an outer needle permeable sleeve 10 to hold the training device 1 in place in a lifelike manner on the arm 2 of the volunteer 3. The flexible needle resistant layer is flexible in all planes including both transverse and longitudinal planes so that the wearable training device 1 therefore replicates the natural shape and physiological movement of a patient's arm and associated vasculature whilst preventing injury to the wearer 3 from needles 11 in use.

The arcuate (in cross-section) subcutaneous layer 5 is made up of an arcuate elongate body 12 having a top face 13 and a bottom face 14 extending between a proximal end 15 and a longitudinally inwardly tapered distal end 16. The elongate body 12 is shaped and contoured to replicate and conform to the shape of the arm 2. The elongate body 12 is sized to cover a significant portion of the arm 2 above and below the ACF. More particularly, the elongate body 12 has a feathered/narrowed side edge 17 to blend the subcutaneous layer 5 with the arm 2 and a convex thickened portion 18 at the top face 13 for anatomical correctness. In addition, the elongate body 12 is shaped to define a concave shape indicated by the reference numeral 19 at the bottom face 14 to optimise the fit of the subcutaneous layer 5 against the arm 2.

The top face 13 of the elongate body 12 is provided with a dynamic vasculature retention mechanism 20 in the form of a curved groove 21 defined in the top face 13 which extends between the proximal end 15 and the distal end 16. The dynamic vasculature retention mechanism 20 is made up of a proximal first groove narrow portion 22 and a distal second groove narrow portion 23 separated by a central groove wider portion 24 contiguous with the first groove narrow portion 22 and the second groove narrow portion 23. The first and second groove narrow portions 22,23 are provided with grips 25 for gripping and holding the artificial blood vessel 7 of the artificial vasculature 6 in place in the vasculature retention mechanism 20.

The central groove wider portion 24 is positioned on the elongate body 12 to correspond with the antecubital fossa (ACF) of the arm 2 and defines a wriggle space 26 at the ACF in which a section 7a of the artificial blood vessel 7 is unsupported. As a result, the unsupported blood vessel section 7a feels softer and bouncier on palpation and, importantly, is free to move or wriggle laterally towards the edges 17 of the elongate body 12 on palpation to fully replicate the movement of real blood vessels.

At its distal end 16, the second groove narrow portion 23 terminates at a hollow 27 for receiving an end cap on the artificial blood vessel 7 while, towards the proximal end 15, the elongate body 12 is provided with a flattened seat 28 to accommodate the reservoir 8 in a streamlined manner on the elongate body 12. The flattened seat 28 has a recess 29 for receiving connectors between the reservoir 8 and the artificial blood vessel 7 to further streamline the training device 1 at the interface between the elongate body 12 and the reservoir 8. This shall described in more detail below.

At the proximal end 15, the elongate body 12 is also provided with oppositely disposed raised mounts 30,31 to support the reservoir 8 on the elongate body 12.

The anatomical model 4, and in particular the elongate body 12 of the subcutaneous layer 5, is provided with a joint 32 between the proximal and distal ends 15,16 to facilitate articulation of the medical device 1 at the ACF i.e. bending of the elbow joint of the arm 2 to replicate patient arm movement in clinical settings.

The joint 32 is defined by oppositely disposed top ribs 33,34 defined in the top face 13 of the elongate body 12 either side of the wriggle space 26 and oppositely disposed side ribs 35,36 defined in the feathered edge 17 also either side of the wriggle space 26.

The artificial blood vessel 7 is made up of an elongate plastics tube 37 typically having a wall thickness of about 0.5mm. As indicated above, the plastics tube 37 is provided with an end cap/stopper 38 towards the distal end 16 of the elongate body 12 which is accommodated in the hollow 27 so that the end cap 38 is effectively undetectable in use. At its opposite end, the elongate plastics tube 37 is connected to the reservoir 8 via a tube valve connector 39 inserted in the tube 37 and a reservoir valve connector 40 extending between the tube valve connector 39 and the reservoir 8. The reservoir 8 is located on the flattened seat 28 of the elongate body 12 immediately adjacent the tube 37 with the tube valve connector 39 inserted into the tube 37 gripped in the proximal groove narrow portion 22. As a result, kinking of the tube 37 is prevented at the interface of the artificial blood vessel 7 and the reservoir 8 while the recess 29 in the flattened seat 28 receives the valve connectors 39,40 to further streamline the training device 1. The use of valve connectors 39,40 ensures that there is no leaking of artificial blood from either the reservoir 8 or the artificial vasculature 6 when the tube 37 is disconnected from the reservoir (for instance to replace a leaking tube 37).

The concave bottom face 14 of the elongate body 12 is provided with a compartment 41 shaped and dimensioned to receive the flexible needle resistant layer 9. The compartment 41 and the flexible needle resistant layer 9 is sized and shaped to protect the wearer's arm 2 from needle puncture wounds and is generally located in the region of the wriggle space 26 (at the ACF in use). The flexible needle resistant layer 9 and the associated compartment 41 are generally larger in shape and size than the wriggle space 26 and extend the length of the artificial vasculature 6 between the proximal and distal ends 15,16 to allow for a large margin of error when the training device 1 is in use. The compartment 41 is closed by a compartment cover 42.

The anatomical model 4 and in particular the elongate body 12 of the subcutaneous layer 5 can be formed from a silicone material which is durable and easily wiped clean - an important consideration following use of the training device 1 as the artificial vasculature 6 can develop leaks with repeated needle penetration of the vasculature 6. The silicone is highly flexible and easily conforms to the shape of the wearer's arm 2.

Suitable silicone materials include medical grade silicones such as polydimethylsiloxane (PDMS) which is suitable for skin contact. Synthetic or natural rubber materials or flexible polymers may also be used. In general, suitable materials should be hygienic, inert, flexible and safe for use against the skin where necessary although, as discussed further below, the sleeve 10 can prevent contact between the subcutaneous layer 5 and the wearer's skin.

Specific examples of suitable materials include polyurethanes, open cell foams, ethylene propylene diene monomer rubber (EPDM), butyl rubber, closed cell foams (such as ethyl vinyl acetate (EVA), natural rubber, nitrile rubber (NBR), styrene-butadiene rubber (SBR) and open or closed cell neoprene.

The flexible needle resistant layer 9 can be formed from metals or polymers e.g. tightly woven metals or polymers such as an aramid material on which a thin layer of ceramic has been sprayed. Para- aramid materials can also be employed. Generally, the needle resistant layer can be formed from materials such as a metal, a polymer, a super dense fabric, a super dense strong fabric with a ceramic coating, ceramic tiles, steel mesh and Kevlar (Trade Mark). These materials can be in the form of super dense fabrics, super dense strong fabrics with ceramic coating, ceramic tiles and steel mesh. Such materials provide a high degree of needle resistance, including resistance to needles having a small bevel, whilst still maintaining a high degree of flexibility. Another example of such a suitable material is Eureka SupraBlock Stop (Trade Mark) material, a tightly woven para-aramid and ceramic composite, available from Eureka Safety, a division of Y. Berger & Co AB.

The outer needle permeable sleeve 10 covers the training device 1 and accurately recreates the properties of skin whilst also withstanding repeated venipuncture and assisting in rendering the device 1 lifelike and indistinguishable from the wearer's arm. The outer sleeve 10 is substantially tubular in shape and is contoured to follow the shape of the wearer's arm. Internally, the outer sleeve 10 is provided with an elongate pocket 43 for receiving the subcutaneous layer 5. The pocket 43 is shaped and sized to receive and hold the subcutaneous layer 5 and associated vasculature 6 in position in the training device 1 on the wearer's arm 2. The pocket 43 allows the subcutaneous layer 5 and associated vasculature 6 to be moved into position and adjusted to overlie the ACF without unwanted relative movement of the subcutaneous layer 5 and associated vasculature 6. The pocket 43 also serves to prevent contact between the material of the subcutaneous layer 5 and the wearer's skin e.g. where a non-medical grade material is employed for the subcutaneous layer 5 and/or where the wearer has sensitive skin.

The outer sleeve 10 is also sized so that the reservoir 8 is partially concealed beneath the sleeve 10 with any remaining portion of the reservoir 8 being concealed beneath the wearer's clothing or hospital gown etc. so that the reservoir 8 is completely unnoticeable e.g. the sleeve 10 can extend from the wearer's wrist to the axilla. The resulting continuous appearance (from top of the arm to the wrist) combined with the close conformity of the sleeve 10 to the arm 2 helps create the illusion of taking blood from the wearer's arm 2.

The sleeve 10 is sufficiently transparent or opaque at the vasculature 6 so that the vasculature 6 is identifiable through the sleeve 10.

The outer sleeve 10 is formed from a material that easily conforms to the shape of the wearer's arm 2 whilst facilitating bending of the elbow. An example of a suitable material is a combination material made up of a neoprene (in skin colours) and spandex. The use of neoprene allows artificial blood staining to be wiped from the neoprene while the spandex pulls the neoprene to the shape of the arm 2 and is breathable making it cooler and more comfortable to wear when compared with a sleeve formed from neoprene alone. The neoprene/spandex sleeve 10 is also washable for reuse of the sleeve 10. The outer sleeve 10 can comprise neoprene for about 2/3 of its circumference and spandex for about 1/3 of its circumference which also assists in ensuring a tight fit of the outer sleeve 10.

In use, the modular training device 1 is assembled by inserting the artificial vasculature 6 in the subcutaneous layer 5 as previously described and attaching the reservoir 8 to the artificial vasculature 6 via the valve connectors 39,40. The subcutaneous layer 5 and the reservoir 8 are then inserted in the elongate pocket 43 of the outer sleeve 10. The training device 1 can then be placed on the arm 2 of the volunteer wearer 3 with the reservoir 8 partially concealed by the wearer's 3 clothing if desired. Trainees/students can then practice venipuncture techniques with needles 11 in a real life scenario as desired.

## Claims

1. A wearable venipuncture training device (1) for attachment to a limb (2) comprising:
an anatomical model (4) attachable to the limb (2);
artificial vasculature (6) associated with the anatomical model (4);
a needle resistant layer (9) for preventing a needle (11) from puncturing the limb (2), and
an outer needle permeable sleeve (10) shaped to hold the anatomical model (4) and vasculature (6) on the limb (2) **characterised in that** the needle resistant layer (9) is a flexible needle resistant layer (9) comprising a flexible layer of material and is housed in a compartment (41), closed by a compartment cover (42), defined in the anatomical model (4).

2. A wearable venipuncture training device (1) as claimed in Claim 1 wherein the outer needle permeable sleeve (10) is also shaped to conceal the anatomical model (4) and vasculature (6) on the limb (2).

3. A wearable venipuncture training device (1) as claimed in Claim 1 or Claim 2 wherein the flexible needle resistant layer (9) is flexible in both a transverse and a longitudinal plane.

4. A wearable venipuncture training device (1) as claimed in any of Claims 1 to 3 wherein the flexible needle resistant layer (9) is selected from the group consisting of a metal, a polymer, a super dense fabric, a super dense strong fabric with a ceramic coating, ceramic tiles, steel mesh and Kevlar (Trade Mark).

5. A wearable venipuncture training device (1) as claimed in any of Claims 1 to 4 wherein the anatomical model (4) comprises an artificial subcutaneous layer (5).

6. A wearable venipuncture training device (1) as claimed in Claim 5 wherein the artificial subcutaneous layer (5) comprises an artificial vasculature retaining mechanism (20).

7. A wearable venipuncture training device (1) as claimed in Claim 6 wherein the artificial vasculature retaining mechanism (20) comprises a groove (21) defined in the subcutaneous layer (5).

8. A wearable venipuncture training device (1) as claimed in any of Claims 1 to 7 wherein the artificial vasculature (6) is partially unsupported to allow movement of the artificial vasculature (6).

9. A wearable venipuncture training device (1) as claimed in Claim 7 or Claim 8 wherein the groove (21) comprises a groove wider portion (24) defining a wriggle space (26) in which the artificial vasculature (6) is unsupported.

10. A wearable venipuncture training device (1) as claimed in any of Claims 5 to 9 wherein the artificial subcutaneous layer (5) comprises a joint (32) to facilitate articulation of the subcutaneous layer (5) with the limb (2).

11. A wearable venipuncture training device (1) as claimed in Claim 10 wherein the joint (32) is defined by ribs (33,34) in the subcutaneous layer (5).

12. A wearable venipuncture training device (1) as claimed in any of Claims 5 to 11 wherein the subcutaneous layer (5) further comprises a seat (28) for receiving a reservoir (8) at a proximal end thereof.

13. A wearable venipuncture training device (1) as claimed in any of Claims 5 to 12 wherein the subcutaneous layer (5) comprises a hollow (27) for receiving an end cap of an artificial blood vessel (7) at a distal end thereof.

14. A wearable venipuncture training device (1) as claimed in any of Claims 1 to 13 wherein the anatomical model (4) is formed from a resiliently deformable material.

15. A wearable venipuncture training device (1) as claimed in any of Claims 1 to 14 wherein the sleeve (10) comprises a pocket (43) for the anatomical model (4) and the artificial vasculature (6).

## Patentansprüche

1. Am Körper tragbare Venenpunktions-Trainingsvorrichtung (1) zum Anbringen an einer Gliedmaße (2), umfassend:
ein anatomisches Modell (4), das an der Gliedmaße (2) angebracht werden kann;
künstliche Vaskulatur (6), die mit dem anatomischen Modell (4) assoziiert ist;
eine nadelfeste Schicht (9) zum Verhindern, dass eine Nadel (11) in die Gliedmaße (2) einsticht, und
einen äußeren, nadeldurchlässigen Schlauch (10), der dazu geformt ist, das anatomische Modell (4) und die Vaskulatur (6) an der Gliedmaße (2) zu halten, **dadurch gekennzeichnet, dass** es sich bei der nadelfesten Schicht (9) um eine biegsame nadelfeste Schicht (9) handelt, die eine biegsame Schicht aus Material umfasst und in einem von einer Fachabdeckung (42) verschlossenen Fach (41), das in dem anatomischen Modell (4) definiert ist, untergebracht ist.

2. Am Körper tragbare Venenpunktions-Trainingsvorrichtung (1) nach Anspruch 1, wobei der äußere nadeldurchlässige Schlauch (10) außerdem dazu geformt ist, das anatomische Modell (4) und die Vaskulatur (6) an der Gliedmaße (2) zu verbergen.

3. Am Körper tragbare Venenpunktions-Trainingsvorrichtung (1) nach Anspruch 1 oder Anspruch 2, wobei die biegsame nadelfeste Schicht (9) in sowohl einer querlaufenden als auch einer längslaufenden Ebene biegsam ist.

4. Am Körper tragbare Venenpunktions-Trainingsvorrichtung (1) nach einem der Ansprüche 1 bis 3, wobei die biegsame nadelfeste Schicht (9) aus der Gruppe ausgewählt ist, die aus einem Metall, einem Polymer, einem superdichten Textilstoff, einem superdichten festen Textilstoff mit einer Keramikbeschichtung, Keramikkacheln, Stahlgeflecht und Kevlar (TradeMark) besteht.

5. Am Körper tragbare Venenpunktions-Trainingsvorrichtung (1) nach einem der Ansprüche 1 bis 4, wobei das anatomische Modell (4) eine künstliche subkutane Schicht (5) umfasst.

6. Am Körper tragbare Venenpunktions-Trainingsvorrichtung (1) nach Anspruch 5, wobei die künstliche subkutane Schicht (5) einen künstlichen Vaskulatur-Festhaltemechanismus (20) umfasst.

7. Am Körper tragbare Venenpunktions-Trainingsvorrichtung (1) nach Anspruch 6, wobei der künstliche Vaskulatur-Festhaltemechanismus (20) eine in der subkutanen Schicht (5) definierte Nut (21) umfasst.

8. Am Körper tragbare Venenpunktions-Trainingsvorrichtung (1) nach einem der Ansprühe 1 bis 7, wobei die künstliche Vaskulatur (6) teilweise ungestützt ist, um die Bewegung der künstlichen Vaskulatur (6) zu ermöglichen.

9. Am Körper tragbare Venenpunktions-Trainingsvorrichtung (1) nach Anspruch 7 oder Anspruch 8, wobei die Nut (21) einen breiteren Nutabschnitt (24) umfasst, der einen Bewegungsraum (26) definiert, in dem die künstliche Vaskulatur (6) ungestützt ist.

10. Am Körper tragbare Venenpunktions-Trainingsvorrichtung (1) nach einem der Ansprüche 5 bis 9, wobei die künstliche subkutane Schicht (5) ein Gelenk (32) umfasst, um die gelenkige Bewegung der subkutanen Schicht (5) mit der Gliedmaße (2) zu erleichtern.

11. Am Körper tragbare Venenpunktions-Trainingsvorrichtung (1) nach Anspruch 10, wobei das Gelenk (32) von Rippen (33, 34) in der subkutanen Schicht (5) definiert ist.

12. Am Körper tragbare Venenpunktions-Trainingsvorrichtung (1) nach einem der Ansprüche 5 bis 11, wobei die subkutane Schicht (5) ferner eine Aufnahme (28) zum Aufnehmen eines Behälters (8) an einem proximalen Ende davon umfasst.

13. Am Körper tragbare Venenpunktions-Trainingsvorrichtung (1) nach einem der Ansprüche 5 bis 12, wobei die subkutane Schicht (5) eine Höhlung (27) zum Aufnehmen einer Endkappe eines künstlichen Blutgefäßes (7) an einem distalen Ende davon umfasst.

14. Am Körper tragbare Venenpunktions-Trainingsvorrichtung (1) nach einem der Ansprüche 1 bis 13, wobei das anatomische Modell (4) aus einem elastisch verformbaren Material gebildet ist.

15. Am Körper tragbare Venenpunktions-Trainingsvorrichtung (1) nach einem der Ansprüche 1 bis 14, wobei der Schlauch (10) eine Tasche (43) für das anatomische Modell (4) und die künstliche Vaskulatur (6) umfasst.

## Revendications

1. Dispositif portable d'apprentissage de ponction veineuse (1) servant à des fins de fixation sur un membre (2) comportant :
un modèle anatomique (4) en mesure d'être fixé sur le membre (2) ;
un système vasculaire artificiel (6) associé au modèle anatomique (4) ;
une couche résistante aux aiguilles (9) servant à empêcher une aiguille (11) de percer le membre (2), et
un manchon extérieur perméable aux aiguilles (10) dont la forme permet de retenir le modèle anatomique (4) et le système vasculaire (6) sur le membre (2), **caractérisé en ce que** la couche résistante aux aiguilles (9) est une couche flexible résistante aux aiguilles (9) comportant une couche flexible de matériau et est logée dans un compartiment (41), fermé par un couvercle de compartiment (42), défini dans le modèle anatomique (4).

2. Dispositif portable d'apprentissage de ponction veineuse (1) selon la revendication 1, dans lequel le manchon extérieur perméable aux aiguilles (10) présente également une forme permettant de dissimuler le modèle anatomique (4) et le système vasculaire (6) sur le membre (2).

3. Dispositif portable d'apprentissage de ponction veineuse (1) selon la revendication 1 ou la revendication 2, dans lequel la couche flexible résistante aux aiguilles (9) est flexible à la fois dans un plan transversal et dans un plan longitudinal.

4. Dispositif portable d'apprentissage de ponction veineuse (1) selon l'une quelconque des revendications 1 à 3, dans lequel la couche flexible résistante aux aiguilles (9) est sélectionnée dans le groupe constitué par un métal, un polymère, un tissu super dense, un tissu résistant super dense avec un revêtement de céramique, des carreaux de céramique, des mailles métalliques et du Kevlar (TradeMark).

5. Dispositif portable d'apprentissage de ponction veineuse (1) selon l'une quelconque des revendications 1 à 4, dans lequel le modèle anatomique (4) comporte une couche sous-cutanée artificielle (5).

6. Dispositif portable d'apprentissage de ponction veineuse (1) selon la revendication 5, dans lequel la couche sous-cutanée artificielle (5) comporte un mécanisme de retenue de système vasculaire artificiel (20).

7. Dispositif portable d'apprentissage de ponction veineuse (1) selon la revendication 6, dans lequel le mécanisme de retenue de système vasculaire artificiel (20) comporte une rainure (21) définie dans la couche sous-cutanée (5).

8. Dispositif portable d'apprentissage de ponction veineuse (1) selon l'une quelconque des revendications 1 à 7, dans lequel le système vasculaire artificiel (6) est partiellement non supporté pour permettre le mouvement du système vasculaire artificiel (6).

9. Dispositif portable d'apprentissage de ponction veineuse (1) selon la revendication 7 ou la revendication 8, dans lequel la rainure (21) comporte une plus large partie de rainure (24) définissant un espace de tortillement (26) dans lequel le système vasculaire artificiel (6) est non supporté.

10. Dispositif portable d'apprentissage de ponction veineuse (1) selon l'une quelconque des revendications 5 à 9, dans lequel la couche sous-cutanée artificielle (5) comporte un raccord (32) servant à faciliter l'articulation de la couche sous-cutanée (5) par rapport au membre (2).

11. Dispositif portable d'apprentissage de ponction veineuse (1) selon la revendication 10, dans lequel le raccord (32) est défini par des nervures (33, 34) dans la couche sous-cutanée (5).

12. Dispositif portable d'apprentissage de ponction veineuse (1) selon l'une quelconque des revendications 5 à 11, dans lequel la couche sous-cutanée (5) comporte par ailleurs un siège (28) servant à recevoir un réservoir (8) au niveau d'une extrémité proximale de celui-ci.

13. Dispositif portable d'apprentissage de ponction veineuse (1) selon l'une quelconque des revendications 5 à 12, dans lequel la couche sous-cutanée (5) comporte un creux (27) servant à recevoir un embout d'un vaisseau sanguin artificiel (7) au niveau d'une extrémité distale de celui-ci.

14. Dispositif portable d'apprentissage de ponction veineuse (1) selon l'une quelconque des revendications 1 à 13, dans lequel le modèle anatomique (4) est formé à partir d'un matériau déformable de manière élastique

15. Dispositif portable d'apprentissage de ponction veineuse (1) selon l'une quelconque des revendications 1 à 14, dans lequel le manchon (10) comporte une poche (43) pour le modèle anatomique (4) et le système vasculaire artificiel (6).
